# EUROPÄISCHE PATENTSCHRIFT

(11) **EP 3 025 577 B1**
(45) Veröffentlichungstag und Bekanntmachung des Hinweises auf die Patenterteilung: **04.01.2017**
(21) Anmeldenummer: 14194660.8
(22) Anmeldetag: 25.11.2014
(51) Int. Cl.: A01D 78/06, A01D 78/10

(54) **Universalschwader**
Universal rakes
Andaineur universel

(43) Veröffentlichungstag der Anmeldung: 01.06.2016
(73) Patentinhaber: Kverneland Group Kerteminde AS, 5300 Kerteminde (DK)
(72) Erfinder: Mattutis, Peter, 78576 Emmingen-Liptingen (DE)
(74) Vertreter: Grünecker Patent- und Rechtsanwälte PartG mbB

(56) Entgegenhaltungen:
- EP-A1- 2 047 739
- EP-A2- 2 281 435
- US-A- 2 694 895
- US-A- 4 685 282

## Beschreibung

Die Erfindung betrifft einen Universalschwader gemäß Oberbegriff des Patentanspruchs 1.

Unter einem Universalschwader wird hier z.B. eine Schwaderkombination verstanden, die mehrere angetriebene Schwadelemente aufweist, mit unterschiedlichen Arbeitsbreiten einsetzbar ist, und wahlweise unterschiedliche Schwade bildet.

Bei der aus EP 2 281 435 A2 bekannten Schwaderkombination sind am Tragbalken in Arbeitsfahrtrichtung hinten zwei gegensinnig zur Mitte hin antreibbare Schwadkreisel symmetrisch angeordnet. Davor sind am Tragbalken, ebenfalls symmetrisch zu diesem, zwei Bandrechen an Tragarmen angeordnet. Die Bandrechen werden zum Arbeiten mit maximaler Arbeitsbreite quer zur Fahrtrichtung soweit ausgefahren, dass sie sich in etwa mit den außenliegenden Seiten der Schwadkreisel überlappen und zur Mitte fördern. Zum Umfahren von Hindernissen oder zum Verringern der Arbeitsbreite kann jeder Bandrechen maximal um seine quer zur Arbeitsfahrtrichtung gesehene Länge im Eingriff mit dem Erntegut bzw. Boden in Richtung zum Tragbalken hin verstellt werden. Sowohl die Bandrechen als auch die Schwadkreisel haben vorgegebene Drehrichtungen und sind nicht richtungsumkehrbar. Unabhängig von der Positionierung der Bandrechen sind ausschließlich Mittelschwad-Arbeitspositionen einstellbar.

Bei einem aus US 4685282 A bekannten Universalschwader, der zu einem Tedder umbaubar ist, werden drei in Arbeitsstellungen schräg gegenüber der Fahrtrichtung angestellte hydraulisch angetriebene Rechen jeweils an eigenen Tragbalken verwendet. Jeder Rechen weist an zwei gegenüberliegenden starren Endplatten eines Korbs schrägstehende Sternräder auf, zwischen denen sich an den Sternarmenden angelenkte Querstäbe erstrecken. Jeder Querstab trägt mehrere vertikal nach unten stehende Zinken mit nach hinten abgebogenen Zinkenenden, so dass bei der synchronen Rotation der Sternräder die Zinken elliptische Umlaufbewegungen ausführen und dabei von hinten nach unten in das Erntegut stechen, und dann nach vorne und oben bewegt werden, und zwar mit einer schräg gegenüber der Fahrtrichtung orientierten Bewegungskomponente. Die Schrägstellung jedes Rechens wird durch Bodenlaufräder eingestellt, die relativ zu einem Tragrahmen des Rechens um vertikale Achsen verschwenkbar und am Tragrahmen festlegbar sind. Der Tragrahmen ist um eine vertikale Schwenkachse relativ zum Tragbalken schwenkbar. Ein Hydrozylinder stellt den relativen Winkel zwischen dem Tragarm und dem Traggestell ein.

Bei einer aus EP 2047739 A1 bekannten, geschobenen Vorrichtung zum Bergen von Erntegut sind an einem bodenparallel umlaufenden Zahnriemen einzelne zweiarmige Zinken senkrecht abstehend montiert, die das Erntegut nur in Bodennähe bearbeiten. Der Zahnriemen oder Keilriemen ist hydraulisch angetrieben, und seine Laufrichtung kann umgekehrt werden. Die Tragkonstruktion der Vorrichtung wird nach vorne durch eine plattenartige Verschalung überdeckt, die mit Führungsschlitzen für die hindurchragenden Zinken versehen ist. Die Vorrichtung wird in der Arbeitsstellung oben nach vorne gekippt und bildet entweder einen linken oder einen rechten Schwad. Bei starkem Erntegutanfall staut sich das Erntegut an der Verschalung oberhalb der Zinken. Außerdem tritt Erntegut zwischen den Zinken in das Innere der Vorrichtung und am Keilriemen vorbei ein, das die Funktion der Vorrichtung beeinträchtigen und in erheblichem Maß auf dem Boden liegen bleiben kann.

In einem aus US 2694895 A bekannten Schwader ist an einem dreieckigem Fahrgestell ein unter rechtem Winkel gegenüber der Fahrtrichtung orientierter Rechen montiert, der in einem Tragrahmen endseitig obere und untere Zahnriemenscheiben lagert, die von einem Hydromotor antreibbar sind und Zahnriemen mit in Laufrichtung beabstandeten, im Wesentlichen vertikalen Zinken tragen. Die Laufrichtung der Zahnriemen ist manuell durch Umspannen eines Antriebsriemens umkehrbar. Aufgrund der relativ großen Freiräume zwischen den Zinken und den Zahnriemen kann Erntegut ungehindert in den Rechen eindringen und ohne nennenswerte Querförderung auf dem Boden liegenbleiben.

Unter einem Mittelschwad ist z.B. ein Schwad zu verstehen, in den Schwadelemente Erntegut von beiden Seiten des Schwads einbringen. Ein Seitenschwad ist hingegen ein Schwad, in welchen mehrere Schwadelemente Erntegut von derselben Seite einbringen. Einzelschwade werden erzeugt, wenn einander zugeordnete Schwadelemente, z.B. bei gleichen Laufrichtungen , in Querrichtung vollständig separiert sind, und jedes Schwadelement nur in einen Schwad fördert.

Der Erfindung liegt die Aufgabe zugrunde, einen Universalschwader der eingangs genannten Art anzugeben, der trotz relativ großer maximaler Arbeitsbreite kostengünstig, relativ leichtgewichtig und komfortabel einzusetzen ist, und der es ermöglicht, wenigstens einen Mittelschwad, einen Seitenschwad oder zwei Einzelschwade zu bilden.

Die gestellte Aufgabe wird mit den Merkmalen des Patentanspruchs 1 gelöst.

Da die Laufrichtung des Bandrechens umkehrbar ist, und sich der Bandrechen von einer Mittelschwad-Arbeitsposition zu einer der anderen Seite des hinteren Schwadelements zugeordneten überlappenden Seitenschwad-Arbeitsposition oder sogar in eine separierte Einzelschwad-Arbeitsposition noch weiter verstellen lässt, ermöglicht es der Universalschwader, je nach Bedarf einen Mittelschwad oder einen Seitenschwad oder zwei Einzelschwade zu bilden. Dabei ergeben sich auch u.a. aufgrund der Kinematik unterschiedliche Arbeitsbreiten. Eine Umstellung zwischen den unterschiedlichen Arbeitsbreiten und/oder zwischen einem Mittelschwad, einem Seitenschwad oder zwei Einzelschwaden kann nämlich z.B. nach Anfall des Ernteguts auf dem Feld oder beispielsweise der Abwurfbreite eines davor benutzten Mähers für den Landwirt zweckmäßig sein. Diese Anforderung erfüllt der erfindungsgemäße Universalschwader auf baulich einfache Weise bereits mit nur zwei Schwadelementen. Dabei hat der Bandrechen den Vorteil, in der jeweiligen Arbeitsposition in Fahrtrichtung schmal zu sein, so dass eine relativ kurze Länge des Tragbalkens ausreicht, was Gewicht einsparen lässt und die Manövrierfähigkeit verbessert. Außerdem lässt sich der Bandrechen bequem und platzsparend in einer Transportposition verstauen. Es weist der Bandrechen ein im Wesentlichen horizontal umlaufendes, förderbandartiges Band mit annähernd senkrecht zur Laufrichtung stehenden Trumen auf. Das Band ist mit im Wesentlichen vertikalen Zinken mit abgebogenen unteren Zinkenenden bestückt, die in Laufrichtung beabstandet sind. Am Band sind nicht nur die Zinken stabil abgestützt, sondern das Band verhindert bei größerem Erntegutanfall das Eindringen des Ernteguts zwischen die Zinken und in das Innere des Bandrechens. Außerdem hat das Band eine spürbare Hilfs-Förderwirkung, so dass insgesamt der Universalschwader auch bei hohem Erntegutanfall relativ schnell gefahren werden kann und wegen seiner guten Förderleistung das Erntegut ordnungsgemäß verarbeitet. Der Bandrechen mit den stehenden Trumen hat ein Traggestell, das annähernd vertikale Umlenkwalzen für das Band enthält, sowie Laufräder oder Kufen zum Abstützen des Bandrechens auf dem Boden. Das Traggestell ist über die verstellbare Tragarm-Konstruktion am Tragbalken abgestützt. Bei einer alternativen Ausführungsform des Universalschwaders ist der Bandrechen mit einem annähernd boden parallelen förderbandartigen Band ausgebildet, von dem Zinken im Wesentlichen senkrecht abstehen. Die Zinken stehen in Arbeitsstellung annähernd vertikal zum Boden und passen somit zu jeder Laufrichtung des Bandes. Obwohl ggf. die Förderleistung dieses Konzepts geringer sein kann, als die eines Bandrechens mit stehenden Trumen, bietet die einfachere Laufrichtungsumkehr einen Vorteil. Die Laufrichtung lässt sich hier, vorzugsweise durch die Verstellung des Bandrechens zwischen den Arbeitsstellungen relativ zum Boden umkehren, ohne dass am Bandrechen selbst eine Umkehr einzusteuern wäre. Dies bedeutet eine weitere Vereinfachung des Universalschwaders.

Zweckmäßig ist der Bandrechen um mindestens die quer zur Fahrtrichtung gesehene Arbeitslänge des Bandrechens versetzbar, vorzugsweise sogar mindestens um die quer zur Fahrtrichtung gesehene Wirklänge des zugeordneten hinteren Schwadelements. Zwischenstellungen des Bandrechens sind ebenfalls einstellbar, so dass eine universelle Anpassbarkeit an die jeweils gewünschte Arbeitsbreite möglich ist.

Besonders zweckmäßig ist der Bandrechen vom Schlepper aus umkehrbar und verstellbar, vorzugsweise hydraulisch. Dies erhöht den Bedingungskomfort und die Arbeitsleistung des Universalschwaders erheblich, da der Schlepperfahrer für Umstellungen weder abzusteigen noch zeitaufwändig Werkzeuge zu benutzen braucht.

Die am Band angeordneten, von diesen abstehenden Zinken sind in ihrer Arbeitsstellung annähernd vertikal und passen somit zu jeder Laufrichtung des Bandes. Obwohl ggf. die Förderleistung dieses Konzepts geringer sein kann, als die eines Bandrechens mit stehenden Trumen, bietet die einfachere Laufrichtungsumkehr einen Vorteil.

Die Tragarm-Konstruktion ist vorzugsweise zumindest knickbar schwenkbar und/oder teleskopierbar. Die Tragarm-Konstruktion überträgt die Reaktionskräfte aus der Arbeit des Bandrechens in den Tragbalken, und nimmt die Verstellungen des Bandrechens relativ zum Tragbalken und zum hinteren Schwadelement vor. Dabei können beliebige Bewegungsabläufe gesteuert werden, ermöglicht durch die knickbare, schwenkbare und/oder teleskopierbare Auslegung der Tragarm-Konstruktion, und gegebenenfalls unterstützt durch wenigstens einen Hydraulikzylinder oder einen anderen Aktuator.

Bei einer zweckmäßigen Ausführungsform ist der Bandrechen von einer Seite des Tragbalkens über den Tragbalken hinweg oder unter dem Tragbalken hindurch zum Teil oder vollständig zur anderen Seite des Tragbalkens verstellbar. Dies ist begünstigt durch eine auch in Hochrichtung kompakte Bauweise des Bandrechens. Gegebenenfalls kann der Tragbalken dort gekröpft ausgebildet sein, wo der Bandrechen von einer Seite zur anderen verstellt wird.

Beim Verstellen des Bandrechens könnte dieser sogar um etwa 180° um eine annähernd vertikale Achse verdreht werden, wenn er mittels der Tragarm-Konstruktion von einer Seite des Tragbalkens auf die andere geschwenkt wird. Hierbei wird die Laufrichtung des Bandrechens umgekehrt, damit dieser wieder dem hinteren Schwadelement vorlegt oder den Einzelschwad bildet. Die Laufrichtung des Bandrechens kann ggf. beibehalten werden, um den vorderen Einzelschwad dann ganz außen zu bilden.

Die maximale Arbeitsbreite des Universalschwaders ergibt sich in der Einzelschwad-Arbeitsposition des Bandrechens, bei der zwei Einzelschwade erzeugt werden. In einer Mittelschwad-Arbeitsposition des Bandrechens ergibt sich eine größere Arbeitsbreite als in der Seitenschwad-Arbeitsposition, die vorzugsweise um etwa 10 bis 20 % größer sein kann.

Zweckmäßig wird in der Ausführungsform mit dem Bandrechen mit dem annähernd bodenparallelen förderbandartigen Band der Bandrechen beim Verstellen zwischen den Arbeitsstellungen um eine annähernd bodensenkrechte oder eine bodenparallele, etwa in Fahrtrichtung orientierte Achse verschwenkt, bspw. unter dem Tragbalken durch oder über den Tragbalken hinweg. Ein Teil dieser Verschwenkung, ggf. kombiniert mit einem Ausheben des Bandrechens, kann zum Einstellen der Transportposition des Bandrechens genutzt werden.

Einem Schwadkreisel, zweckmäßig mit gesteuerten Zinken, als hinteres Schwadelement ist der Vorzug zu geben, da Schwadkreisel sehr saubere Schwade zu formen vermögen. Um die Gesamtlänge des Universalschwaders zu verkürzen, kann auch das hintere Schwadelement ein Bandrechen sein, ggf. mit umkehrbarer Laufrichtung, was die Einsetzbarkeit des Universalschwaders verbessert.

Zweckmäßig sind die Zinken des Bandrechens bei annähernd bodensenkrechtem Band derart begrenzt drehbar am Band gelagert, dass sie sich allein durch die Umstellung der Laufrichtung des Bandes selbsttätig in die Arbeitsstellung einstellen, die zu der gewählten Laufrichtung passt.Ausführungsformen des Erfindungsgegenstandes werden anhand der Zeichnung erläutert. Es zeigen:
- Fig. 1: eine schematische Draufsicht auf einen von einem Schlepper gezogenen Universalschwader,
- Fig. 2: eine schematische Vorderansicht eines Bandrechens des Universalschwaders von Fig. 1,
- Fig. 3: ein Bewegungsschema zur Verdeutlichung einer Umstellungsmöglichkeit des Bandrechens,
- Fig. 4: eine Einzelschwad-Arbeitsstellung des Bandrechens,
- Fig. 5: eine weitere Ausführungsform der Universalschwader und
- Fig. 6: eine andere Arbeitsstellung.

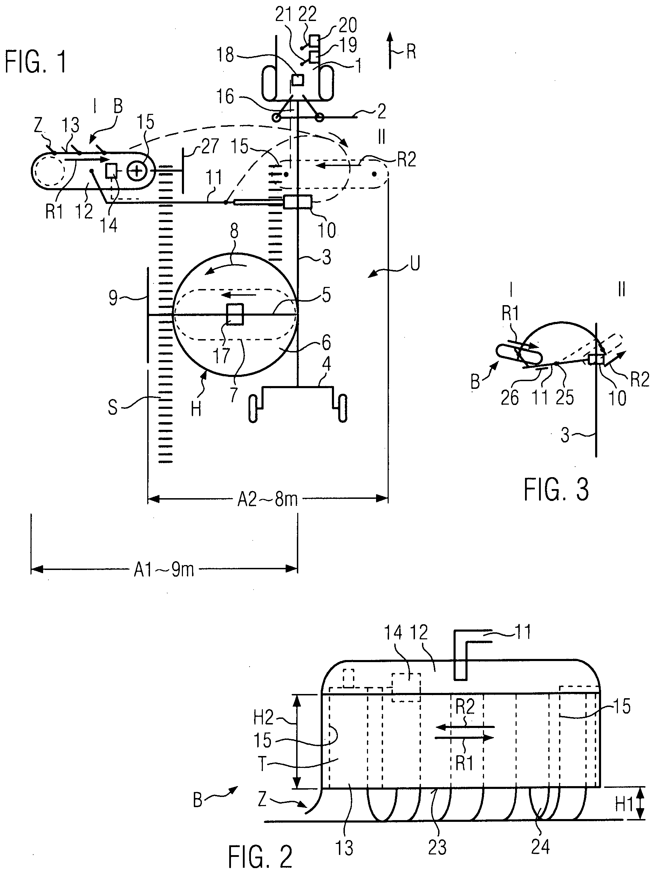

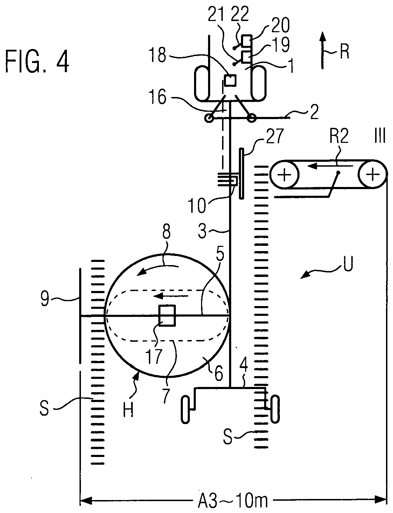

Ein Universalschwader U ist in Fig. 1 an einen Schlepper 1, beispielsweise an einer Dreipunkt-Hebevorrichtung 2, angebaut oder geschleppt und weist einen Tragbalken 3 mit einem endseitigen Fahrwerk 4 auf. Der Universalschwader U lässt sich nicht nur auf unterschiedliche Arbeitsbreiten A1 und A2 (als nicht beschränkende Beispiele) einstellen, sondern auch zur Bildung eines Mittelschwads S (in Fig. 1 in ausgezogenen Linien dargestellt) und zur Bildung eines Seitenschwads (in Fig. 1 gestrichelt angedeutet) oder zur Bildung zweier Einzelschwade (Fig. 4) umstellen. Die Einstellungen bzw. Umstellungen werden zweckmäßig vom Schlepper 1 aus durchgeführt, so dass der Schlepperfahrer hierfür nicht abzusteigen oder zeitaufwändig mit Werkzeugen zu manipulieren braucht.

Die Arbeitsfahrtrichtung ist mit R angedeutet. Am Tragbalken 3 ist mit einem seitlichen Tragarm 5 ein hinteres Schwadelement H angeordnet, das in der gezeigten Ausführungsform ein Schwadkreisel 6, zweckmäßig mit gesteuertem Zinken, ist. Dessen Drehrichtung (Pfeil 8) ist in Fig. 1 gegen den Uhrzeigersinn, um einen Schwad S zu bilden. Dem hinteren Schwadelement H kann ein Schwadblech oder -Tuch 9 zugeordnet sein.

In Arbeitsfahrtrichtung R vor dem hinteren Schwadelement H, das alternativ als Bandrechen 7 ausgebildet sein könnte, ggf. dann sogar mit umkehrbarer Laufrichtung, ist am Tragbalken 3 in einer Abstützung 10 eine verstellbare Tragarm-Konstruktion 11 angeordnet, die einen Bandrechen B als vorderes, dem hinteren Schwadelement H funktionell zugeordnetes Schwadelement abstützt. Die Tragarm-Konstruktion 11 kann zumindest knickbar und/oder zumindest teilweise teleskopierbar und mit nicht gezeigten Aktuatoren, zumindest einem Hydraulikzylinder oder dergleichen, kombiniert sein.

Der Bandrechen ist in Fig. 1 in einer Mittelschwad-Arbeitsposition I angeordnet, in der sich eine große Arbeitsbreite A1 von z.B. etwa 9 m ergibt und der Schwad S ein Mittelschwad ist, da der Bandrechen B und das hintere Schwadelement H von gegenüberliegenden Seiten Entegut in den Schwad S bringen.

Mittels der Tragarm-Konstruktion 11 und dem zumindest einen Aktuator kann der Bandrechen B relativ zum hinteren Schwadelement H in zumindest eine Seitenschwad-Arbeitsposition II verstellt werden, in der er überlappend der andern Seite des hinteren Schwadelements H zugeordnet ist. In beiden Arbeitspositionen I, II arbeitet der Bandrechen B, dessen Laufrichtung R1, R2 umkehrbar ist, in etwa quer zur Arbeitsfahrtrichtung R.

Alternativ könnte das jeweils äußere Ende des Bandrechens B gegenüber dem jeweils inneren Ende in Arbeitsfahrtrichtung R etwas voreilen.

In der Seitenschwad-Arbeitsposition II ergibt sich gemäß Fig. 1 eine geringere Arbeitsbreite A2 von beispielsweise ca. 8 m. Der Unterschied zwischen den Arbeitsbreiten kann zweckmäßig zwischen etwa 10 bis 20 % oder mehr der maximalen Arbeitsbreite (Fig. 4) betragen. Bei der Umstellung zwischen den Arbeitspositionen wird der Bandrechen B zweckmäßig um einen Weg quer verlagert, der größer ist als die quer zur Arbeitsfahrtrichtung R gesehene Wirklänge des Bandrechens. B. Natürlich sind mittels der Tragarm-Konstruktion 11 auch Zwischenstellungen des Bandrechens B abweichend von der in Fig. 1 angedeuteten möglich.

Beim Umstellen zwischen den Arbeitspositionen kann der Bandrechen B ggf. über den Tragbalken hinweg oder unter diesem hindurch bewegt werden. Gegebenenfalls ist der Tragbalken 3 in diesem Bereich gekröpft, um genügend Bodenfreiheit zum Unterbringen und Bewegen des Bandrechens B zu bieten. Die Laufrichtung des Bandrechens B z.B. wird beim Wechsel zwischen den Arbeitspositionen I, II umgekehrt (R1, R2), was, wie die Umstellung des Bandrechens auch vom Schlepper 1 aus durchgeführt werden kann. In allen Arbeitspositionen ist der Bandrechen B jeweils geringfügig oben in Arbeitsfahrtrichtung R schräg gestellt. Ggf. ist am Bandrechen B ein Schwadtuch 27 angebracht, das, zweckmäßig, beim oder nach dem Wechsel der Arbeitsposition bzw. der Umkehr der Laufrichtung, z.B. hydraulisch, an die andere Seite des Bandrechens B gebracht wird.

Ein möglicher Aufbau des Bandrechens B wird anhand der Fig. 1 und 2 erläutert. Der Bandrechen B besitzt ein obenliegendes Traggestell 12, an welchem die Tragarm-Konstruktion 11 angreift, zweckmäßig in einem Gelenk. Im Traggestell 12 sind mindestens zwei parallele Walzen 15 stehend gelagert, auf denen ein förderbandartiges Band 13 läuft, das aus einem zugfesten Elastomermaterial besteht und gegebenenfalls faser- und/oder gewebeverstärkt ist. Das Band 13 ist mit annähernd vertikal orientierten Zinken Z bestückt, die in Laufrichtung voneinander beabstandet sind und nach unten außen abgebogene Zinkenenden besitzen können. Die Zinken Z sind zweckmäßig begrenzt drehbar am Band 13 gelagert, so dass sie sich selbsttätig in die der jeweiligen Laufrichtung R1 oder R2 angepasste Arbeitsposition einstellen. In Fig. 2 sind die Zinken Z des Bandrechens B in Arbeitspositionen dargestellt, die zur Laufrichtung R1 passen.

Die Walzen 15 sind zweckmäßig bombiert, damit das Band 13 selbsttätig zentriert bleibt. Alternativ kann das Band 13 innere Führungsränder zur Zentrierung auf zylindrischen Walzen 15 haben. Eine Walze 15 wird beispielsweise durch einen Hydraulikmotor 14 mit variierbarer Geschwindigkeit drehangetrieben, der aus einer Schlepperhydraulik 18 gespeist wird.

Gemäß Fig. 2 hat das Band 13 eine Höhe H2 von mindestens 20 cm, wobei ein unterer Rand 23 einen Abstand H1 von ca. 50 mm vom Boden hat. Der Bandrechen B verfügt über Bodenlaufrollen oder Kufen 24, die gegebenenfalls selbstlenkend, und/oder höhenverstellbar, sind.

Das hintere Schwadelement H wird beispielsweise in einer Ausführung als Schwadkreisel 6 von einem Zapfwellenanschluss 16 des Schleppers 1 aus über eine mechanische Getriebeverbindung bis in ein Mittellager 17 angetrieben, wobei die nicht gezeigten Zinken des Schwadkreisels 6 in üblicher Weise gesteuert sein können. Das Fahrwerk 4 kann entweder selbstlenkend ausgelegt sein, oder lenkbare Bodenlaufräder haben, um den Tragbalken 3 in Relation zum Schlepper 1 zur einen oder anderen Seite schräg stellen zu können. Im Falle eines Bandrechens 7 mit stehenden Trumen als hinteres Schwadelement H wird dieser zweckmäßig ebenfalls hydraulisch angetrieben. Dann kann es zweckmäßig sein, nur diesen Bandrechen 7 laufrichtungsumkehrbar auszubilden. Dann könnte er in Fig. 1 und 4 einen Schwad S unter dem Fahrwerk 4 (z.B. zwischen dessen Rädern) ablegen. Die dadurch mögliche kompakte Bauform gestattet ggf. einen 3-Punktanbau am Schlepper, sodass das Fahrwerk 4 entfallen kann.

Im Schlepper 1 sind Steuereinheiten 19, 20 mit Betätigern 21 und 22 angedeutet, die beispielsweise zum Verstellen des Bandrechens B bzw. zur Umkehr der Laufrichtung vom Schlepperfahrer betätigt werden, und die mit der Schlepperhydraulik 18 in Steuerverbindung sind.

In Fig. 1 wird der Bandrechen B zwischen den Arbeitspositionen I und II beispielsweise im Wesentlichen quer zur Arbeitsfahrtrichtung R verlagert. In der Arbeitsposition I könnte sogar die Laufrichtung R2 des Bandrechens B eingestellt werden, um zwei Einzelschwade zu bilden.

Fig. 3 deutet eine Variante der Verstellung des Bandrechens B hierzwischen den Arbeitsstellungen I und II an. Es enthält die Tragarm-Konstruktion ein Gelenk 25 mit annähernd bodensenkrechter Achse, so dass der Bandrechen B in einer Schwenkbewegung um das Gelenk verlagert und geordnet wird. Dabei bewegt sich der Bandrechen B unter dem Tragbalken 3 durch zur anderen Seite. Hier ist der Bandrechen B in beiden Arbeitspositionen I und II auch etwas schräg gestellt (entgegengesetzte Laufrichtungen R1, R2). Die Tragarm-Konstruktion 11 kann zumindest zum Teil (bei 26 angedeutet) teleskopierbar sein, einerseits beispielsweise die Veränderung der Arbeitsbreite, andererseits auch die Umstellung zwischen den Arbeitspositionen I, II zu erleichtern und, beispielsweise, den Schwenkradius vorübergehend zu verringern.

Der Universalschwader U kann in einer alternativen, nicht gezeigten Ausführungsform mehr als ein hinteres Schwadelement H und mehr als einen Bandrechen B aufweisen. Der Rechkreisel 6 könnte alternativ von einem Hydraulikmotor angetrieben werden.

Zum Transport des Universalschwaders U wird gegebenenfalls das hintere Schwadelement H hochgeschwenkt, und wird auch der Bandrechen B hochgeschwenkt und gegebenenfalls verdreht, um die erforderliche Transportbreite und -höhe bequem einhalten zu können. Der Bandrechen B kann dabei in einer waagerechten oder schrägen Lage längs zur Fahrtrichtung so ausgerichtet werden, dass auch große Bandrechen von ca. 5m das zulässige Transportprofil nicht überschreiten.

Bei dem Bewegungsablauf in Fig. 3 wird der Bandrechen B um nahezu 180° um die Achse 25 auch umgedreht. In jedem Fall kann der Bandrechen B beim Umstellen zwischen den Arbeitspositionen vorübergehend, z.B. über die Tragarm-Konstruktion 11, ausreichend vom Boden abgehoben werden.

Fig. 4 verdeutlicht die Querverlagerung des Bandrechens B vollständig zur anderen Seite des Tragbalkens 3 und separiert vom hinteren Schwadelement H in eine Einzelschwad-Arbeitsposition III für beispielsweise eine maximale Arbeitsbreite A3 von etwa 10m. Hier werden zwei Einzelschwade S gebildet, wobei die Laufrichtung R2 am Bandrechen B eingestellt ist. Allerdings könnte alternativ die Laufrichtung R1 bleiben, damit der Bandrechen B den Einzelschwad ganz außen bildet, d.h. entfernt vom Tragbalken 3 und außerhalb der Fahrwerkslaufspuren (nicht gezeigt).

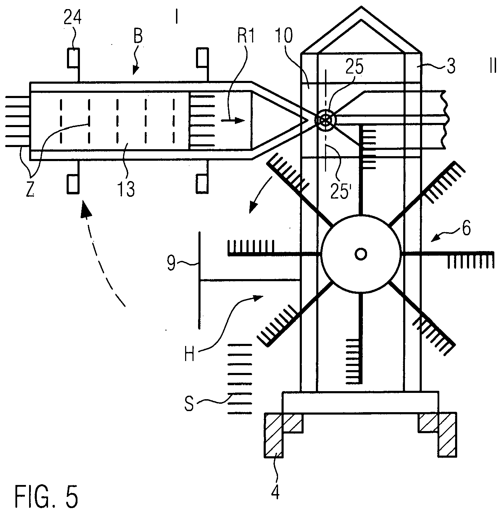

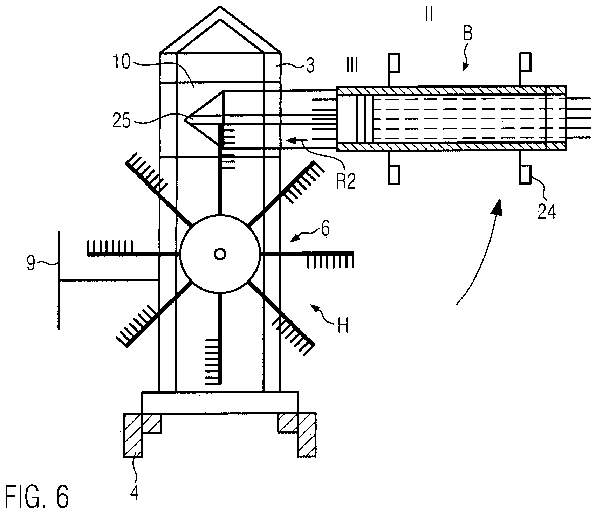

In den gezeigten Ausführungen der Fig. 1 bis 4 ist ein Bandrechen B mit stehenden Band-Trumen vorgesehen. Alternativ könnte gemäß Fig. 5 und 6 der vordere, die Bodenlaufräder oder Kufen 24 aufweisende Bandrechen B mit annähernd bodenparallelem Band 13 (ähnlich einem Förderband) ausgebildet sein, wobei davon abstehende Zinken Z in den Arbeitsstellungen im Wesentlichen vertikal orientiert sind. Dies ist günstig zum Umkehren der Bandlaufrichtung von R1 zu R2 und umgekehrt, weil sich die Laufrichtung relativ zum Boden selbsttätig umkehrt, wenn der Bandrechen B von der Arbeitsposition I zur Arbeitsposition II oder III umgestellt wird, sodass am Bandrechen B keine Umkehr vorgenommen zu werden braucht. Denn der Bandrechen B wird hier z.B. um eine annähernd bodensenkrechte Achse 25 oder eine annähernd bodenparallele und in Fahrtrichtung orientierte Achse 25' geschwenkt. Diese Achse 25, 25' könnte gemäß Fig. 5, 6 an der Abstützung 10 des Tragbalkens 3 quer zur Fahrtrichtung verstellt werden

Der Tragbalken 3 ist in den Fig. 5, 6 rahmenartig gestaltet und stützt das hintere Schwadelement H mittig ab. Zum Transport bräuchte demzufolge das hintere Schwadelement H nur entsprechend weit ausgehoben zu werden.

## Patentansprüche

1. Universalschwader (U), mit einem Tragbalken (3), an dem in Fahrtrichtung (R) hinten wenigstens ein Schwadelement (H) und davor über eine verstellbare Tragarm-Konstruktion (L) am Tragbalken (3) mindestens ein gegenüber dem Schwadelement (H) seitlich versetzter Bandrechen (B) abgestützt sind, wobei der Bandrechen (B) quer zur Fahrtrichtung (R) relativ zum hinteren Schwadelement (H) seitlich versetzbar ist, **dadurch gekennzeichnet, dass** der Bandrechen (B) richtungsumkehrbar und von wenigstens einer seitlich gegenüber einer Seite des Schwadelements (H) versetzten Mittelschwad-Arbeitsposition (I) quer zur Fahrtrichtung (R) zu wenigstens einer der anderen Seite des Schwadelements (H) zugeordneten mit dem hinteren Schwadelement (H) überlappenden Seitenschwad-Arbeitsposition (II) oder in eine vom hinteren Schwadelement (H) separierte Einzelschwad-Arbeitsposition (III) verstellbar ist, und dass der Bandrechen (B) entweder ein im Wesentlichen horizontal umlaufendes, annähern senkrecht stehendes, förderbandartiges Band (13) aufweist, das mit in Laufrichtung beabstandeten, im Wesentlichen vertikalen Zinken (Z) mit abgebogenen unteren Zinkenenden bestückt ist, und ein Traggestell (12) mit annähernd vertikalen Umlenkwalzen (15) für das Band (13) und Laufräder oder Kufen (24), oder ein annähernd bodenparalleles, förderbandartiges Band (13) mit davon in Arbeitsstellungen in etwa vertikal orientierten, abstehenden Zinken (Z) aufweist, dessen Laufrichtung (R1, R2) relativ zum Boden durch die Verstellung des Bandrechens (B) zwischen Arbeitsstellungen (I, II, III) umkehrbar ist.

2. Universalschwader nach Anspruch 1, **dadurch gekennzeichnet, dass** der Bandrechen (B) um mindestens die quer zur Fahrtrichtung (R) gesehene Wirklänge des Bandrechens (B) versetzbar ist.

3. Universalschwader nach Anspruch 1, **dadurch gekennzeichnet, dass** der Bandrechen (B) vom Schlepper (1) aus richtungsumkehrbar und verstellbar ist, vorzugsweise hydraulisch.

4. Universalschwader nach Anspruch 1, **dadurch gekennzeichnet, dass** die Tragarm-Konstruktion (L) für den Bandrechen (B) zumindest knickbar, schwenkbar und/oder teleskopierbar ist.

5. Universalschwader nach Anspruch 1, **dadurch gekennzeichnet, dass** der Bandrechen (B) von einer Seite des Tragbalkens (3) über diesen hinweg oder unter diesem hindurch zum Teil oder vollständig zur anderen Seite des Tragbalkens (3) verstellbar ist.

6. Universalschwader nach Anspruch 1, **dadurch gekennzeichnet, dass** der Bandrechen (B) beim Verstellen relativ zum Tragbalken (3) um etwa 180° drehbar ist.

7. Universalschwader nach Anspruch 1, **dadurch gekennzeichnet, dass** die Arbeitsbreite (A1) des Universalschwaders (U) in der Mittelschwad-Arbeitsposition (I) des Bandrechens (B) größer ist als in der Seitenschwad-Arbeitsposition (II), vorzugsweise um etwa 10 bis 20 % oder mehr, und dass eine maximale Arbeitsbreite (A3) in der Einzelschwad-Position (III) einstellbar ist.

8. Universalschwader nach Anspruch 1, **dadurch gekennzeichnet, dass** Bandrechen (B) beim Verstellen zwischen Arbeitspositionen (I, II, III) um eine annähernd bodensenkrechte oder eine bodenparallele, etwa in Fahrtrichtung (R) orientierte Achse (25, 25')schwenkbar ist.

9. Universalschwader nach Anspruch 1, **dadurch gekennzeichnet, dass** das hintere Schwadelement (H) ein Schwadkreisel (6) oder ein Bandrechen (7) ist, wobei vorzugsweise der Bandrechen (7) laufrichtungsumkehrbar ist.

10. Universalschwader nach Anspruch 1, **dadurch gekennzeichnet, dass** die Zinken (Z) des Bandrechens (B) durch Umkehren der Laufrichtungen (R1, R2) des Bandes (13) selbsttätig zwischen den Laufrichtungen (R1, R2) angepassten Arbeitspositionen am Band (13) umstellbar sind.

11. Universalschwader nach Anspruch 1, **dadurch gekennzeichnet, dass** in der Einzelschwad-Arbeitsposition III des Bandreches (B) mit dem hinteren Schwadelement (H) ein zweiter Einzelschwad (S) bildbar ist.

## Claims

1. Universal rake (U), comprising a carrying beam (3) at which in traveling direction (R) in the rear at least one swath element (H) and in front of the swath element (H) at least one band rake (B) are supported, the band rake (B) being offset sidewards relative to the swath element (H) and being linked to the carrying beam (3) by an adjustable carrier arm construction (L), wherein the band rake (B) can be dislocated sidewardly crosswise to the traveling direction (R) and relative to the rear swath element (H), **characterized in that** the direction of the band rake (B) can be inverted and that the band rake (B) is adjustable out of at least one center swath-working position (I) sidewardly in relation to one side of the swath element (H) and crosswise to the traveling direction (R) either to at least one side swath-working position (II) associated to the other side of the swath element (H) and into a lateral overlap with the rear swath element (H) or into a single swath-working position (III) laterally separated from the rear swath element (H), and that the band rake (B) either comprises a conveyor belt-like band (13) orbiting substantially horizontally and being arranged substantially vertical, the band (13) being equipped with substantially vertical tines (Z) spaced apart in band running direction and having bent-off lower tine ends, and a carrying frame (12) including substantially vertical deflecting rollers (15) for the band (13) and ground wheels or skids (24), or a conveyor belt-like band (13) arranged substantially parallel to the ground and having tines (Z) which protrude in working position from the band (13) with an essentially vertical orientation, the running direction (R1, R2) of the band (13) relative to the ground is reversible by an adjustment of the band rake (B) between the respective working positions (I, II, III).

2. Universal rake (U) according to claim 1, **characterized in that** the band rake (B) can be dislocated crosswise to the traveling direction (R) for at least the active longitudinal extension of the band rake (B).

3. Universal rake (U) according to claim 1, **characterized in that** the band rake (B) can be adjusted and its running direction can be reversed from the tractor (1), preferably hydraulically.

4. Universal rake (U) according to claim 1, **characterized in that** the carrier arm-construction (L) for the band rake (B) is at least articulatable, pivotable and/or telescopable.

5. Universal rake (U) according to claim 1, **characterized in that** the band rake (B) is adjustable from one side of the carrying beam (3) partially or totally to the other side of the carrying beam (3) either over the carrying beam or under the carrying beam.

6. Universal rake (U) according to claim 1, **characterized in that** the band rake (B) can be rotated for about 180° during the adjustment relative to the carrying beam (3).

7. Universal rake (U) according to claim 1, **characterized in that** the working width (A1) of the universal rake (U) in the center swath-working position (I) of the band rake (B) is larger than in the side swath-working position (II), preferably by about 10% to 20% or more, and that a maximum working width (A3) can be adjusted in the single swath-working position (III).

8. Universal rake (U) according to claim 1, **characterized in that** the band rake (B) while being adjusted between respective working positions (I, II, III) is swivable about an axis (25, 25'), which is either substantially perpendicular to the ground or is parallel to the ground and oriented substantially in traveling direction (R).

9. Universal rake (U) according to claim 1, **characterized in that** the rear swath element (H) either is a swath rotor (6) or a band rake (7), wherein, preferably, the running direction of the band rake (7) is to be inverted.

10. Universal rake (U) according to claim 1, **characterized in that** the tines (Z) of the band rake (B) can be adjusted automatically by inverting the running direction (R1, R2) of the band (13) between different working positions at the band (13) which fit to the respective running direction (R1, R2).

11. Universal rake (U) according to claim 1, **characterized in that** a second single swath (S) can be formed by the rear swath element (H) in the single swath-working position (III) of the band rake (R).

## Revendications

1. Andaineuse universelle (U) comprenant un longeron porteur (3) sur lequel prennent appui, à l'arrière en se référant à la direction de circulation (R), au moins un élément à andainer (H) et, devant celui-ci, par l'intermédiaire d'une construction de bras porteur réglable (L) sur le longeron porteur (3), au moins un râteau à bande (B) décalé latéralement par rapport à l'élément à andainer (H), le râteau à bande (B) pouvant être déplacé latéralement, transversalement à la direction de circulation (R), par rapport à l'élément à andainer arrière (H),
**caractérisée en ce que** le râteau à bande (B) est d'une configuration à sens de marche pouvant être inversé, et peut être déplacé transversalement à la direction de circulation (R), d'au moins une position de travail d'andain central (I) décalée latéralement par rapport à un côté de l'élément à andainer (H), vers au moins une position de travail d'andain latéral (II) associée à l'autre côté de l'élément à andainer (H) et en chevauchement avec l'élément à andainer arrière (H), ou bien vers une position de travail d'andain individuel (III) séparée de l'élément à andainer arrière (H), et **en ce que** le râteau à bande (B) comprend une bande (13) de type bande de transport sensiblement en révolution horizontale et approximativement en position verticale, qui est équipée de dents (Z) sensiblement verticales, espacées dans le sens de marche et présentant des extrémités de dents inférieures coudées, et une structure de support (12) avec des rouleaux de renvoi (15) sensiblement verticaux pour la bande (13) et des roulettes de déplacement ou des patins de glissement (24), ou bien comprend une bande (13) de type bande de transport approximativement parallèle au sol, de laquelle font saillie des dents (Z) sensiblement orientées à la verticale dans des positions de travail, bande dont le sens de marche (R1, R2) par rapport au sol peut être inversé par le déplacement du râteau à bande (B) entre les positions de travail (I, II, III).

2. Andaineuse universelle selon la revendication 1, **caractérisée en ce que** le râteau à bande (B) peut être déplacé d'au moins la longueur active du râteau à bande (B), vue transversalement à la direction de circulation (R).

3. Andaineuse universelle selon la revendication 1, **caractérisée en ce que** le râteau à bande (B) peut être déplacé et son sens de marche inversé à partir du tracteur (1), de préférence par voie hydraulique.

4. Andaineuse universelle selon la revendication 1, **caractérisée en ce que** la construction de bras porteur (L) pour le râteau à bande (B) est au moins repliable, pivotante et/ou télescopique.

5. Andaineuse universelle selon la revendication 1, **caractérisée en ce que** le râteau à bande (B) peut être déplacé à partir d'un côté du longeron porteur (3), en passant par-dessus celui-ci ou en passant en-dessous de celui-ci, en partie ou totalement de l'autre côté du longeron porteur (3).

6. Andaineuse universelle selon la revendication 1, **caractérisée en ce que** le râteau à bande (B) peut, lors du déplacement, être tourné d'environ 180° par rapport au longeron porteur (3).

7. Andaineuse universelle selon la revendication 1, **caractérisée en ce que** la largeur de travail (A1) de l'andaineuse universelle (U), dans la position de travail d'andain central (I) du râteau à bande (B), est plus grande que dans la position de travail d'andain latéral (II), de préférence d'environ 10 à 20% ou davantage, et **en ce qu'**une largeur de travail maximale (A3) peut être réglée dans la position d'andain individuel (III).

8. Andaineuse universelle selon la revendication 1, **caractérisée en ce que** le râteau à bande (B), lors du déplacement entre les positions de travail (I, II, III) peut pivoter autour d'un axe (25, 25') sensiblement vertical par rapport au sol, ou bien parallèle au sol et orienté sensiblement dans la direction de circulation (R).

9. Andaineuse universelle selon la revendication 1, **caractérisée en ce que** l'élément à andainer arrière (H) est une toupie andaineuse (6) ou un râteau à bande (7), le râteau à bande (7) étant de préférence d'une configuration à sens de marche pouvant être inversé.

10. Andaineuse universelle selon la revendication 1, **caractérisée en ce que** les dents (Z) du râteau à bande (B), par inversion des sens de marche (R1, R2) de la bande (13), peuvent commuter automatiquement, sur la bande (13), entre les positions de travail adaptées aux sens de marche (R1, R2).

11. Andaineuse universelle selon la revendication 1, **caractérisée en ce que** dans la position de travail d'andain individuel (III) du râteau à bande (B), il est possible de former un deuxième andain individuel (S) avec l'élément à andainer arrière (H).
